(19) Europäisches Patentamt
European Patent Office
Office européen des brevets

(11) EP 2 158 651 B1

(12) FASCICULE DE BREVET EUROPEEN

(45) Date de publication et mention de la délivrance du brevet:
**15.01.2014 Bulletin 2014/03**

(51) Int Cl.:
*H01S 3/00* [(2006.01)]  *H01S 3/067* [(2006.01)]

(21) Numéro de dépôt: **08806000.9**

(86) Numéro de dépôt international:
**PCT/FR2008/051065**

(22) Date de dépôt: **13.06.2008**

(87) Numéro de publication internationale:
**WO 2009/004232 (08.01.2009 Gazette 2009/02)**

(54) **SOURCE D'IMPULSIONS LUMINEUSES ULTRABREVES DE FORTE PUISSANCE**

QUELLE FÜR ULTRAKURZEN HOCHLEISTUNGSLICHTIMPULS

ULTRA-SHORT HIGH-POWER LIGHT PULSE SOURCE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.06.2007 FR 0755798**

(43) Date de publication de la demande:
**03.03.2010 Bulletin 2010/09**

(73) Titulaires:
- **Amplitude Systemes**
  **33600 Pessac (FR)**
- **Institut d'Optique Graduate School**
  **91127 Palaiseau (FR)**
- **Centre National de la Recherche Scientifique**
  **75794 Paris Cedex 16 (FR)**

(72) Inventeurs:
- **MOTTAY, Eric**
  **F-33130 Begles (FR)**
- **GEORGES, Patrick**
  **F-78590 Noisy Le Roi (FR)**
- **ZAOUTER, Yoann**
  **F-33000 Bordeaux (FR)**
- **HANNA, Marc**
  **F-91470 Limours (FR)**
- **PAPADOPOULOS, Dimitris**
  **F-17778 Athenes (GR)**
- **DRUON, Frédéric**
  **F-91400 Orsay (FR)**
- **CORMIER, Eric**
  **F-33610 Cestas (FR)**

(74) Mandataire: **Michelet, Alain et al**
**Cabinet HARLE et PHELIP**
**14-16, rue Ballu**
**75009 Paris (FR)**

(56) Documents cités:
**WO-A-2006/057655    WO-A-2006/113507**
**US-B2- 7 167 300**

- **LIMPERT J ET AL B ET AL: "High-power femtosecond Yb-doped fiber amplifier" OPTICS EXPRESS OPT. SOC. AMERICA USA, vol. 10, no. 14, 15 juillet 2002 (2002-07-15), XP002479265 ISSN: 1094-4087**
- **SOH D B S ET AL: "Efficient femtosecond pulse generation using a parabolic amplifier combined with a pulse compressor. I. Stimulated Raman-scattering effects" JOURNAL OF THE OPTICAL SOCIETY OF AMERICA B (OPTICAL PHYSICS) OPT. SOC. AMERICA USA, vol. 23, no. 1, janvier 2006 (2006-01), pages 1-9, XP002479266 ISSN: 0740-3224 cité dans la demande**

## Description

L'invention concerne une source d'impulsions lumineuses ultrabrèves de forte puissance.

Les fibres optiques dopées ytterbium sont largement utilisées dans les sources d'impulsions lumineuses ultrabrèves. Elles possèdent de nombreux avantages pour générer et amplifier les impulsions lumineuses ultrabrèves, et se sont imposées comme une alternative séduisante aux systèmes conventionnels basés sur la propagation en espace libre. En particulier, elles ont démontrés d'excellentes propriétés thermo-optiques, une large bande spectrale de gain (>40 nm), une fluence (énergie divisée par la surface) de saturation élevée, permettant la génération d'impulsions d'énergie de l'ordre du millijoule, et une efficacité optique élevée (>80%).

En revanche, le confinement de la lumière dans le coeur de la fibre optique, associé à des longueurs de propagation importantes, favorise les effets non linéaires qui détériorent les impulsions lumineuses, limitant ainsi la montée en puissance et en énergie des source d'impulsions lumineuses ultrabrèves de forte puissance crête de l'art antérieur.

Une première solution pour limiter ces effets est de répartir l'intensité optique dans l'espace, c'est-à-dire de concevoir des fibres à large aire effective tout en restant monomode pour conserver l'excellente qualité spatiale du faisceau lumineux. Cette solution est décrite dans le document J. Limpert, A. Liem, M. Reich, T. Schreiber, S. Nolte, H. Zellmer, A. Tünnermann, J. Broeng, A. Petersson, and C. Jakobsen, "Low-nonlinearity single-transverse-mode ytterbium-doped photonic crystal fiber amplifier," Opt. Express 12, 1313-1319 (2004). Cette solution est associée à l'utilisation d'une technique d'étirement temporel afin de diminuer la puissance crête associée à l'impulsion lumineuse.

Cette technique est appelée « amplification à dérive de fréquence » (CPA « Chirped-Pulse Amplification »). Cette solution est décrite dans le document D. Strickland and G. Mourou, "Compression of amplified chirped optical pulses," Opt. Commun. 56, 219-221 (1985), et a d'abord été utilisée dans le contexte des amplificateurs d'impulsions picoseconde à base de verre dopé néodyme, puis pour des impulsions femtoseconde dans des cristaux de saphir dopés au titane ($Ti^{3+}:Al_2O_3$). Elle consiste à étirer les impulsions lumineuses temporellement au moyen d'un système optique dispersif, ce qui permet de diminuer la puissance crête l'impulsion lumineuse, de façon à permettre l'utilisation de l'amplificateur dans le régime linéaire. Les impulsions lumineuses amplifiées sont alors comprimées par un deuxième système optique dispersif qui introduit une phase spectrale exactement opposée à celle de l'étireur. L'utilisation de cette technique dans le cadre d'amplificateurs à fibre optique a permis la génération d'impulsions lumineuses sub picoseconde avec une énergie de l'ordre du millijoule et à la génération d'impulsions lumineuses femtoseconde de forte puissance moyenne.

Il est connu que les effets non linéaires, qui se produisent lors de la propagation du flux lumineux dans l'amplificateur, peuvent, dans certains cas, être tolérés, voire qu'ils peuvent améliorer la performance des systèmes CPA. La conception de ces systèmes est basée sur un équilibre délicat entre effets non linéaires et dispersion dans tous les éléments du système : étireur, amplificateur, compresseur. Il existe des systèmes CPA haute énergie et haute puissance crête, présentant une accumulation de phase non linéaire non négligeable ($\Phi_{NL} > \pi$). De tels systèmes sont connus des documents L. Shah, Z. Liu, I. Hartl, G. Imeshev, G. Cho, and M. Fermann, "High energy femtosecond Yb cubicon fiber amplifier," Opt. Express 13, 4717-4722 (2005) et L. Kuznetsova, A. Chong, and F. W. Wise, "Interplay of nonlinearity and gain shaping in femtosecond fiber amplifiers," Opt. Lett. 31 , 2640-2642 (2006).

De manière générale, les systèmes CPA linéaires ou quasi linéaires à fibre optique dopée aux ions ytterbium sont limités à la génération d'impulsions de durée supérieure à 100 femtosecondes. Cette limitation est due à l'effet de rétrécissement du spectre par le gain.

Le document M. Fermann, A. Galvanauskas, D. J. Harter "Modular high-energy widely-tunable ultrafast fiber source," US patent 7,167,300 B2 (2007), divulgue la possibilité d'appliquer un régime parabolique d'amplification aux amplificateurs à fibre optique dopée ytterbium. Les impulsions lumineuses paraboliques sont la solution asymptotique de l'équation de Schrödinger non linéaire qui gouverne la propagation des impulsions lumineuses dans les fibres optiques en prenant en compte un gain spectral constant, l'automodulation de phase (SPM « self-phase modulation »), et une dispersion de vitesse de groupe normale (GVD « group-velocity dispersion »). Celle-ci est donnée par la relation suivante :

$$i\frac{\partial u}{\partial z} = \frac{\beta_2}{2}\frac{\partial^2 u}{\partial t^2} - \gamma |u|^2 u + i\frac{g}{2}u$$

où u est l'enveloppe complexe du champ, z est la distance le long de la fibre, t est la variable temporelle, $\beta_2$ est la dispersion de vitesse de groupe, $\gamma$ est le coefficient non linéaire de la fibre, $i = \sqrt{-1}$, et g est le gain linéique de la fibre.

L'interaction entre l'automodulation de phase (SPM) et la dispersion de vitesse de groupe normale (GVD) en présence de gain résulte en un régime de propagation stable qui génère des impulsions lumineuses amplifiées à dérive de fréquence linéaire. La vitesse de convergence vers ce profil dépend de l'énergie et de la durée de l'impulsion lumineuse incidente.

Un système typique basé sur le régime parabolique est composé d'un oscillateur directement couplé à l'amplificateur à fibre dont les paramètres (énergie et durée des impulsions lumineuses d'entrée, dispersion, gain, longueur, et paramètre non linéaire de la fibre) sont ajustés pour obtenir une convergence des impulsions lumineuses vers le profil parabolique, et d'un compresseur qui permet de compenser la dérive de fréquence linéaire acquise lors de la propagation de l'impulsion lumineuse.

Un des avantages du régime parabolique est l'élargissement spectral de l'impulsion lumineuse obtenu dans la fibre, qui mène à une durée d'impulsion lumineuse finale potentiellement inférieure aux impulsions lumineuses d'entrée, contrairement aux durées d'impulsions lumineuses obtenues avec un CPA. De plus, il n'y a pas d'étireur dans un tel système. Un étirement temporel se produit dans la fibre optique amplificatrice.

Toutefois, cette solution asymptotique idéale est expérimentalement limitée par des effets additionnels parasites comme la bande de gain finie du milieu amplificateur, les ordres de dispersion supérieurs, et la diffusion Raman stimulée (SRS), comme décrit dans le document D. B. S. Soh, J. Nilsson, and A. B. Grudinin, "Efficient femtosecond pulse generation using a parabolic amplifier combined with a pulse compressor. I. Stimulated Raman-scattering effects," J. Opt.Soc. Am. B. 22, 1-9, (2005). Ces effets additionnels limitent l'énergie accessible et la qualité des impulsions lumineuses obtenues après recompression.

Le document "High-power femtosecond Yb-doped fiber amplifier" (LIMPERT et al, OPTICS EXPRESS OPT. SOC. AMERICA USA, vol. 10, no. 14, 15 juillet 2002) décrit un dispositif comprenant un oscillateur, un amplificateur à fibre et un compresseur ainsi que l'amplification parabolique d'impulsions femtosecondes dans la fibre amplificatrice à dispersion positive sans utilisation d'étireur à réseaux.

L'objectif de la présente invention est donc de proposer une source d'impulsions lumineuses ultrabrèves de forte puissance permettant de compenser les dispersions associées au dispositif de compression, par les dispersions associées à la fibre optique amplificatrice.

Une telle source d'impulsions lumineuses permet d'obtenir des impulsions lumineuses ultracourtes de forte puissance crête de très bonne qualité, de durée inférieure à la centaine de femtosecondes, et d'énergie pouvant atteindre 290 nJ.

La source d'impulsions lumineuses ultrabrèves permet de s'affranchir de l'étireur temporelle à l'entrée de la fibre optique amplificatrice et d'utiliser un compresseur de conception simple, ne comprenant pas de moyens supplémentaires pour compenser les dispersions.

A cet effet, l'invention concerne une source d'impulsions lumineuses ultrabrèves de forte puissance telle que définie par la revendication 1.

Dans différents modes de réalisation possibles, la présente invention concerne également les caractéristiques suivantes qui pourront être considérées isolément ou selon toutes leurs combinaisons techniquement possibles et apportent chacune des avantages spécifiques :

- le guide d'onde présente un spectre de gain fini S3, de largeur de bande B3, ledit guide d'onde étant tel que la largeur de bande B1 du spectre des impulsions d'entrée S1 soit inférieure à la largeur de bande B3 du spectre de gain fini S3, et la largeur de bande B2 du spectre des impulsions amplifiées S2 étant identique ou quasiment identique à la largeur de bande B3 du spectre de gain S3 du guide d'onde,

- le moyen apte à compenser les dispersions générées au moins par le compresseur compense les phases spectrales au moins d'ordre 2 ($\varphi_2$) et 3 ($\varphi_3$),

- le guide d'onde apte à amplifier les impulsions lumineuses d'entrée en régime non linéaire est une fibre optique amplificatrice dopée aux ions ytterbium, ladite fibre optique amplificatrice ayant une longueur supérieure à une longueur critique Lc à partir de laquelle la largeur de bande B2 du spectre des impulsions amplifiées S2 est identique ou quasiment identique à la largeur de bande B3 du spectre de gain S3 du guide d'onde,

- pour une longueur L de la fibre optique amplificatrice égale à 6,5 m, la puissance $P_L$ du deuxième flux lumineux de pompe de la deuxième source de pompe laser est compris entre 15 W et 25 W,

- les première et deuxième sources de pompe laser sont des diodes laser délivrant chacune une puissance de 25 W,

- l'oscillateur laser à verrouillage de modes est un oscillateur femtoseconde comprenant une cavité résonnante de longueur telle que le taux de répétition dudit oscillateur laser soit de 27 MHz, ledit oscillateur laser femtoseconde à verrouillage de modes délivrant des impulsions lumineuses d'entrée ultracourtes ayant une durée de l'ordre de la centaine de femtosecondes et une énergie de l'ordre de 3,5 nJ,

- la longueur L de la fibre optique amplificatrice dopée aux ions ytterbium est de 6,5 m, ladite fibre présentant un coeur de signal de diamètre égal à 20 $\mu$m et un coeur de pompe de diamètre égal à 400 $\mu$m,

- le compresseur comprend deux réseaux en transmission identiques, comprenant chacun 1250 traits/mm,

- la fibre optique amplificatrice est une fibre à maintien de polarisation,

- la fibre optique amplificatrice est une fibre à dispersion normale,

- la fibre optique amplificatrice comprend une première partie de fibre de longueur critique Lc dans laquelle les impulsions lumineuses d'entrée sont transmises en régime parabolique, et une deuxième partie de fibre dans laquelle les impulsions lumineuses d'entrée sont transmises en régime non linéaire,

- la source d'impulsions lumineuses ultrabrèves de forte puissance comprend un modulateur optique, disposé entre l'oscillateur laser à verrouillage de modes et le guide d'onde, de façon à réduire la cadence de répétition des impulsions lumineuses amplifiées en sortie dudit oscillateur laser à verrouillage de modes,
- la source d'impulsions lumineuses ultrabrèves de forte puissance comprend un isolateur, disposé en aval de l'oscillateur laser à verrouillage de modes.

La source d'impulsions lumineuses ultrabrèves de forte puissance, selon l'invention, permet d'obtenir une meilleure compression des impulsions lumineuses large bande générées.

En particulier, la phase spectrale de troisième ordre (TOD « third-order dispersion ») du compresseur est compensée par la phase non linéaire asymétrique accumulée dans l'amplificateur à fibre.

Le régime non linéaire permet de façonner le spectre S1 de l'impulsion lumineuse d'entrée par le spectre de gain fini S3. L'asymétrie du spectre de gain fini S3 est imprimée sur le spectre S1 des impulsions lumineuses d'entrée. L'automodulation de phase sur les impulsions lumineuses d'entrée étirée produit une phase spectrale asymétrique.

La puissance $P_L$ de la deuxième source de pompe laser peut être ajustée de façon à ce que cette phase asymétrique compense la dispersion de troisième ordre (TOD) introduite par le compresseur.

Cela permet d'obtenir des impulsions lumineuses comprimées de très bonne qualité temporelle, de durée bien inférieure à ce qu'il est possible d'obtenir avec des systèmes CPA de l'art antérieur.

La source d'impulsions lumineuses ultrabrèves permet de s'affranchir de l'étireur temporel à l'entrée de la fibre optique amplificatrice et d'utiliser un compresseur de conception simple, ne comprenant pas de moyens supplémentaires pour compenser les dispersions.

La source d'impulsions lumineuses ultrabrèves de forte puissance, selon l'invention, permet de générer des impulsions lumineuses ayant une durée de 63 fs, une énergie de 290 nJ, une puissance crête de 4,6 MW, à une cadence de 27 MHz et une longueur d'onde de 1050 nm. Ceci constitue un record de durée pour des impulsions lumineuses générées à partir d'un amplificateur à fibre dopée ytterbium suivie d'un compresseur à réseaux conventionnel.

L'invention sera décrite plus en détail en référence aux dessins annexés dans lesquels :

- La figure 1 représente une source d'impulsions lumineuses ultrabrèves de forte puissance, selon un mode de réalisation de l'invention ;
- La figure 2 représente l'évolution du rapport ($\varphi_3/\varphi_2$) mesuré en fonction de la puissance des impulsions lumineuses amplifiées ;
- La figure 3 représente le profil des impulsions lumineuses ultracourtes comprimées en fonction du temps ;
- La figure 4 représente le profil des impulsions lumineuses ultracourtes comprimées en fonction de la longueur d'onde ;
- La figure 5 représente l'intensité du spectre et de la phase spectrale des impulsions ultracourtes comprimées pour des impulsions lumineuses amplifiées de puissance maximale de 11,5 W.

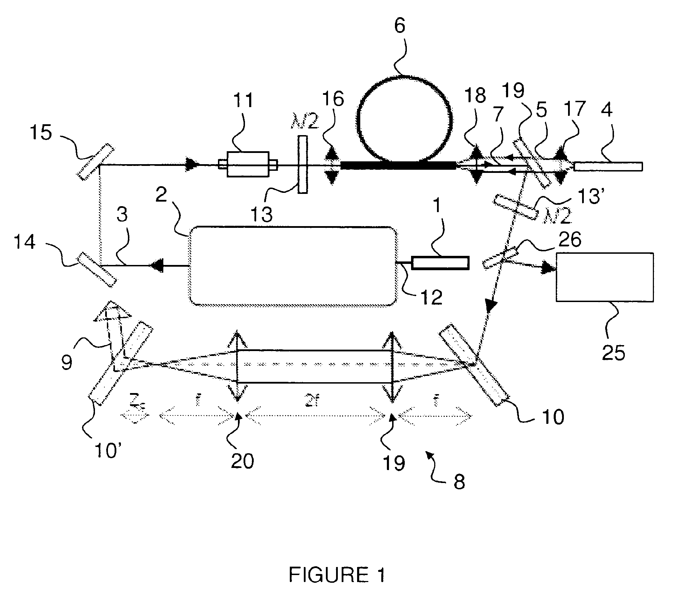

La figure 1 représente une source d'impulsions lumineuses ultrabrèves de forte puissance, selon un mode de réalisation de l'invention.

La source d'impulsions lumineuses ultrabrèves de forte puissance comprend un oscillateur laser à verrouillage de modes 2. Dans l'exemple de la figure 1, l'oscillateur laser à verrouillage de modes 2 est un oscillateur femtoseconde à verrouillage de mode passif, comprenant un absorbant saturable formé de puits quantiques. L'absorbant saturable est déposé sur un miroir de Bragg formé à partir d'un semiconducteur. Le milieu à gain est un cristal de $CaGdAlO_4$ dopé par des ions ytterbium.

L'oscillateur laser à verrouillage de modes 2 est pompé par une première source de pompe laser 1 apte à délivrer un premier flux lumineux de pompe 12. Dans l'exemple de la figure 1, la première source de pompe laser 1 est une diode de pompe laser en InGaAs de haute puissance fibrée émettant une puissance atteignant 25 W sur une fibre optique de diamètre 100 $\mu$m, à la longueur d'onde de 980 nm. Le flux lumineux de pompe 12 est ensuite collimaté par un triplet de focale 76 mm et focalisé dans le cristal à travers un miroir dichroïque avec un triplet identique.

L'oscillateur laser à verrouillage de modes 2 fonctionne à un taux de répétition compris entre 1 MHz et 1 GHz. Dans l'exemple de la figure 1, le taux de répétition est de 27 MHz.

Les impulsions lumineuses d'entrée 3 ultracourtes générées par l'oscillateur laser à verrouillage de modes 2 ont une durée de l'ordre de la centaine de femtosecondes. Les impulsions lumineuses d'entrée 3 présentent un spectre d'impulsion d'entrée S1, de largeur de bande B1. Dans l'exemple de la figure 1, les impulsions lumineuses d'entrée 3 ont une durée de 145 femtosecondes. La largeur de la bande spectrale B1 du spectre d'impulsion d'entrée S1 est de 15 nm, à la longueur d'onde centrale de 1050 nm. La puissance délivrée en sortie de l'oscillateur laser à verrouillage de modes 2 est de 95 mW. L'énergie des impulsions lumineuses d'entrée 3 est de l'ordre de 3,5 nJ.

La source d'impulsions lumineuses ultrabrèves de forte puissance comprend un guide d'onde 6 apte à amplifier les impulsions lumineuses d'entrée 3 en régime non linéaire de façon à introduire des phases spectrales dans les impulsions lumineuses d'entrée 3. Le guide d'onde 6 génère à sa sortie des impulsions lumineuses amplifiées 7 ultracourtes, présentant un spectre d'impulsions amplifiées S2 asymétrique, de largeur de bande B2.

La source d'impulsions lumineuses ultrabrèves peut comprendre un modulateur optique, disposé entre l'oscillateur laser à verrouillage de modes 2 et le guide d'onde 6, de façon à réduire la cadence de répétition des impulsions lumineuses amplifiées 7 en sortie du oscillateur laser à verrouillage de modes 2.

Dans l'exemple de la figure 1 , le guide d'onde 6 apte à amplifier les impulsions lumineuses d'entrée 3 en régime non linéaire est une fibre optique amplificatrice dopée aux ions ytterbium.

La puissance moyenne injectée dans le guide d'onde 6 à fibre dopée ytterbium est de 55 mW (correspondant à une énergie par impulsion lumineuse de 2 nJ). Cette puissance peut être supérieure à 55 mW.

La source d'impulsions lumineuses ultrabrèves de forte puissance peut comprendre un isolateur 11 disposé en aval de l'oscillateur laser à verrouillage de modes 2.

Les impulsions lumineuses d'entrée 3 sont injectées dans le guide d'onde 6 à travers cet isolateur 11.

La source d'impulsions lumineuses ultrabrèves de forte puissance peut comprendre des miroirs 14 et 15 pour diriger les impulsions lumineuses d'entrée 3 vers l'oscillateur laser à verrouillage de modes 2.

La fibre optique amplificatrice 6 peut être une fibre à maintien de polarisation.

La source d'impulsions lumineuses ultrabrèves de forte puissance peut comprendre une lame demi-onde 13 disposée à l'entrée du guide d'onde 6. La lame demi-onde 13 est utilisée pour contrôler l'état de polarisation de l'onde injectée dans la fibre optique amplificatrice 6 à maintien de polarisation.

La source d'impulsions lumineuses ultrabrèves de forte puissance peut également comprendre une deuxième lame demi-onde 13' disposée en sortie du guide d'onde 6.

Une lentille asphérique 16 de focale 18 mm peut être utilisée à l'entrée de la fibre optique amplificatrice 6 pour injecter les impulsions lumineuses d'entrée 3 dans le coeur de la fibre. Cette dernière possède avantageusement une structure à double coeur et à large coeur pour le signal lumineux. La fibre optique amplificatrice 6 présente un coeur de signal de diamètre environ égal à 20 $\mu$m et un coeur de pompe de diamètre environ égal à 400 $\mu$m (Nufern PLMA-YDF-20/400). La fibre optique amplificatrice 6 est une fibre monomode dans laquelle sont injectés des signaux lumineux monomodes.

Toute autre géométrie de fibres optiques amplificatrices dopées ytterbium (simple coeur, double coeur, triple coeur, à large mode, microstructurée, avec ou sans maintien de polarisation...) peut être utilisée.

La longueur L de la fibre optique amplificatrice dopée aux ions ytterbium 6 est avantageusement de 6,5 m, comme décrit plus loin.

La fibre optique amplificatrice 6 est pompée en configuration contra-propagative par une deuxième source de pompe laser 4 apte à délivrer un deuxième flux lumineux de pompe 5. Dans l'exemple de la figure 1, la deuxième source de pompe laser 4 est une diode laser de puissance égale à 25 W sur 100 $\mu$m à 976 nm.

A cette longueur d'onde, l'absorption du deuxième flux lumineux de pompe 5 est de 1,7 dB/m. Le deuxième flux lumineux de pompe 5 est injecté à l'aide de deux lentilles asphériques 17, 18 de focales 15 mm et 8 mm. Un premier miroir dichroïque 19 peut être utilisé pour réfléchir les impulsions lumineuses amplifiées 7 vers le compresseur 8.

Un deuxième miroir dichroïque 26 peut également être utilisé pour extraire les impulsions lumineuses amplifiées 7 en sortie de la fibre optique amplificatrice 6.

Les deux faces de la fibre optique amplificatrice 6 sont clivées à 8° pour supprimer un effet laser parasite éventuel.

A pleine puissance de pompe, la puissance moyenne en sortie de la fibre optique amplificatrice 6 est de 11,5 W. Les impulsions lumineuses amplifiées 7 sont étirées jusqu'à une durée d'impulsion de l'ordre de 5,6 picosecondes. La largeur de bande B2 du spectre d'impulsions amplifiées S2 est élargie jusqu'à 48,5 nm à cause de la dispersion et de l'automodulation de phase (SPM) dans la fibre optique amplificatrice 6.

La source d'impulsions lumineuses ultrabrèves de forte puissance comprend un compresseur 8 apte à comprimer temporellement les impulsions lumineuses amplifiées 7. Le compresseur 8 introduit des phases spectrales prédéterminées dans les impulsions lumineuses amplifiées 7.

On entend par « prédéterminées » des phases spectrales connues qui sont obtenues soit par la mesure ou soit par la simulation, comme décrit plus loin.

Le compresseur 8 comprend une paire de réseaux en transmission 10, 10' Wasatch Photonics identiques, de 1250 traits/mm chacun, dont un premier réseau 10 et un second réseau 10'. Les impulsions lumineuses amplifiées 7 sont incidentes sur le premier réseau 10. Les faisceaux lumineux associés aux impulsions lumineuses amplifiées 7 sont diffractés par le premier réseau 10, focalisés par deux lentilles 19, 20, puis rediffractés par le deuxième réseau 10'. On obtient en sortie du compresseur 8 des impulsions lumineuses ultracourtes comprimées 9.

Les deux réseaux en transmission 10, 10' présentent une haute efficacité 93 % en transmission, en configuration antiparallèle. La distance $z_c$, représentée sur la figure 1 peut varier de 5 à 10 mm. La distance focale f est de 150 mm. L'efficacité globale de compression est de 70%.

Le compresseur 8 est un système dispersif qui peut également être constitué de prismes, de fibres à dispersion décalée en silice ou creuses, de miroirs dispersifs, ou encore de réseaux massifs.

Dans la source d'impulsions lumineuses ultrabrèves, il y a plusieurs sources qui contribuent à la génération de phase spectrale et plus particulièrement de phase spectrale de troisième ordre (TOD « third-order dispersion »). Il y a en fait trois sources principales qui contribuent à la génération de phase spectrale de troisième ordre (TOD).

Premièrement, la fibre optique amplificatrice 6 contribue à la génération de phase spectrale de troisième ordre (TOD), par le troisième ordre de sa constante de propagation $\beta_3$. Cette constante de propagation $\beta_3$ est principalement fonction du matériau constituant le coeur de la fibre, qui est la silice, dans le cas des fibres optiques à large coeur.

Deuxièmement, le compresseur 8 contribue également à la génération de phase spectrale de troisième ordre (TOD).

Malheureusement, le rapport entre la phase spectrale de troisième ordre (TOD) et la dispersion de vitesse de groupe normale (GVD), introduit par la fibre optique amplificatrice 6, a un signe opposé au rapport entre la phase spectrale de troisième ordre (TOD) et la dispersion de vitesse de groupe normale (GVD), introduit par un compresseur à réseaux 8.

Ceci signifie que si le compresseur 8 est réglé pour compenser la dispersion de vitesse de groupe normale (GVD) de la fibre optique amplificatrice 6, la dispersion de vitesse de groupe normale (GVD) associée à la fibre optique amplificatrice 6 et la dispersion de vitesse de groupe normale (GVD) associée au compresseur 8 sont alors de signes opposés. Les phases spectrales de troisième ordre (TOD) de la fibre optique amplificatrice 6 et du compresseur 8 vont s'additionner, car les phases spectrales respectives sont de même signe. Ceci contribue à élargir et déformer l'impulsion lumineuse finale. Cet effet limite la durée et la qualité des impulsions lumineuses paraboliques comprimées à l'aide de réseaux.

La troisième source de phase spectrale de troisième ordre (TOD) vient de l'automodulation de phase asymétrique (SPM « self-phase modulation), mentionnée précédemment. Dans le document A. Galvanauskas. "Ultrashort-pulse fiber amplifiers", in "Ultrafast lasers" CRC, p. 209 (2002), il a été démontré qu'en régime d'impulsions fortement étirées, la phase spectrale non linéaire accumulée est proportionnelle à l'intensité spectrale. Pour des impulsions lumineuses paraboliques idéales, le spectre est symétrique, et ne conduit donc pas à une addition de phase spectrale d'ordre impair. En revanche, si le spectre est rendu asymétrique par une dépendance spectrale du gain asymétrique la contribution de cet effet à la phase spectrale de troisième ordre (TOD) global peut être importante. Cet effet a été utilisé pour des dispositifs CPA de l'art antérieur, divulgués dans le document L. Shah, Z. Liu. I. Hartl, G. Imeshev, G. Cho, and M. Fermann, "High energy femtosecond Yb cubicon fiber amplifier," Opt. Express 13, 4717-4722 (2005).

Dans la source d'impulsions lumineuses ultrabrèves de l'invention, le guide d onde 6 consiste en un moyen apte à compenser les phases spectrales prédéterminées, générées au moins par le compresseur 8. La deuxième source de pompe laser 4 est apte à délivrer un deuxième flux lumineux de pompe 5 de puissance $P_L$ telle que les phases spectrales générées par le guide d'onde 6 soient opposées ou quasiment opposées aux phases spectrales prédéterminées générées par le compresseur 8, de façon à générer des impulsions lumineuses ultracourtes comprimées 9 en sortie du compresseur 8, présentant une phase spectrale plate ou quasiment plate.

Dans un mode de réalisation préféré de l'invention, le guide d'onde 6 consiste en un moyen apte à compenser les phases spectrales prédéterminées, générées seulement par le compresseur 8.

Dans un autre mode de réalisation préféré de l'invention, le guide d'onde 6 est le seul moyen apte à compenser les phases spectrales prédéterminées, ce qui permet d'utiliser un compresseur classique, de conception simple.

Dans un autre mode de réalisation de l'invention, le guide d'onde 6 peut être associé à d'autres moyens pour compenser les phases spectrales prédéterminées.

Les phases spectrales prédéterminées associées au compresseur 8 sont déterminées avant l'opération de compensation.

Le guide d'onde 6, consistant dans l'exemple de la figure 1 en une fibre optique amplificatrice 6, présente un spectre de gain fini S3, de largeur de bande B3.

Le guide d'onde 6, fonctionne en régime parabolique, au delà de la limite imposée par le spectre de gain fini S3, mais sous le seuil de diffusion Raman stimulée.

En cela, l'invention va à l'encontre d'une idée établie selon laquelle la qualité des impulsions lumineuses obtenues se dégrade lorsqu'on dépasse la limite imposée par le spectre de gain fini S3 du guide d'onde 6.

Au contraire, cela permet une meilleure compression des impulsions lumineuses amplifiées 7 qui présentent une large bande spectrale S2.

En particulier, la phase spectrale de troisième ordre (TOD) introduite par le compresseur 8 est compensée par la phase spectrale non linéaire asymétrique accumulée dans la fibre optique amplificatrice 6. En régime non linéaire, le spectre de chaque impulsion lumineuse d'entrée 3 est façonné par le spectre de gain fini S3 de la fibre optique amplificatrice 6. L'asymétrie du spectre de gain fini S3 de la fibre optique amplificatrice 6 est imprimée sur le spectre S2 des impulsions lumineuses d'entrée 3.

Le guide d'onde 6 est tel que la largeur de bande B1 du spectre des impulsions d'entrée S1 est inférieure à la largeur de bande B3 du spectre de gain S3. Et la largeur de bande B2 du spectre des impulsions amplifiées S2 est identique ou quasiment identique à la largeur de bande B3 du spectre de gain S3 du guide d'onde 6.

L'automodulation de phase (SPM) générée dans la fibre optique amplificatrice 6 sur les impulsions lumineuses à spectre asymétrique étirée produit une phase spectrale asymétrique. La puissance $P_L$ du deuxième flux lumineux de pompe 5 générée par la deuxième source de pompe laser 4 est ajustée de façon à ce que la phase asymétrique de la fibre optique amplificatrice 6 compense la phase asymétrique (ou la dispersion de troisième ordre (TOD)) introduite par le compresseur 8.

Pour se placer dans le régime non linéaire, il faut se placer au-delà de la limite du spectre de gain (ou de bande de gain) S3, définie par la relation suivante :

$$ L > \frac{3}{\alpha} \ln\left( \frac{2\Omega^3 \beta_2^2}{\alpha U_{in} \gamma} \right) $$

où L est la longueur de la fibre optique amplificatrice, a est le gain linéique de la fibre optique amplificatrice 6, $\Omega/\pi$ est la largeur à mi-hauteur de la bande de gain S3 de fibre optique amplificatrice 6, $\beta_2$ est le dispersion de vitesse de groupe, $U_{in}$ est l'énergie de l'impulsion lumineuse d'entrée 3, et $\gamma$ est le coefficient non linéaire de la fibre optique amplificatrice 6.

La fibre optique amplificatrice doit avoir une longueur supérieure à une longueur critique Lc, donnée par la relation ci-dessus, à partir de laquelle la largeur de bande B2 du spectre des impulsions amplifiées S2 est identique ou quasiment identique à la largeur de bande B3 du spectre de gain S3 du guide d'onde 6.

La longueur L de la fibre optique amplificatrice 6 dépend des paramètres de l'impulsion lumineuse d'entrée 3, des caractéristiques optogéométriques de la fibre amplificatrice 6, et de la puissance de la première source de pompe laser 1.

La fibre optique amplificatrice 6 comprend une première partie de fibre de longueur critique Lc, comme définie plus haut, dans laquelle les impulsions lumineuses d'entrée 3 sont transmises en régime parabolique, et une deuxième partie de fibre dans laquelle les impulsions lumineuses d'entrée 3 sont transmises en régime non linéaire.

Les paramètres de la fibre optique amplificatrice 6 sont adaptés de façon à obtenir des impulsions lumineuses amplifiées 7 ayant un profil parabolique, dans cette première partie de fibre de longueur critique Lc.

L'exemple suivant donne des paramètres de fibre optique amplificatrice 6 qui peuvent être utilisés pour une énergie d'impulsion lumineuses d'entrée 3 de 2 nJ : L=6.5 m : $\beta_2 \approx 20$ ps$^2$km$^{-1}$, $\gamma \approx 0.7$ W$^{-1}$km$^{-1}$, largeur B3 de bande spectrale S3 du gain $\Delta v_g \approx 10$ THz. La puissance maximum en sortie de fibre optique amplificatrice 6 avant d'atteindre la limite de bande spectrale S3 du gain est de 1,8 W (ce qui correspond à g=0.54 m$^{-1}$, g étant le gain linéique de la fibre). A la puissance de pompe maximale ($g_{max}$=0.82 m$^{-1}$), la longueur critique Lc de fibre optique amplificatrice 6 est de 3,8 m, bien en dessous des 6,5 m utilisés. On est donc bien au-delà de la limite fixée par la bande spectrale S3 du gain.

Les paramètres exacts de la source d'impulsions lumineuses ultrabrèves permettant de compenser la dispersion de troisième ordre (TOD) peuvent être obtenus par la mesure expérimentale directe, comme décrit ci-après, ou par simulation numérique de l'équation de propagation (équation de Schrödinger non linéaire généralisée comprenant le terme de dispersion d'ordre 3 et un gain spectral non constant), par exemple basée sur l'algorithme de split-step Fourier, comme décrit dans le document G. P. Agrawal, "Nonlinear Fiber Optics," Second Edition, Academic Press, p. 50, 1995.

Il est alors possible de déterminer les paramètres de la fibre optique amplificatrice 6 qui peuvent compenser le rapport $\varphi_3/\varphi_2$ (dispersion du troisième ordre (TOD)/ dispersion du deuxième ordre) du compresseur 8 qui est donné par la relation suivante :

$$ \frac{\varphi_3}{\varphi_2} = -\frac{3\lambda}{2\pi c} \left( 1 + \frac{\frac{\lambda}{d}\left(\frac{\lambda}{d} - \sin\gamma\right)}{1 - \left(\frac{\lambda}{d} - \sin\gamma\right)^2} \right) $$

où $\lambda$ est la longueur d'onde centrale, d est la période des traits des réseaux 10, 10', $\gamma$ est l'angle d'incidence du faisceau lumineux en sortie de la fibre optique amplificatrice 6 sur le premier réseau 10, et c est la vitesse de la lumière dans le vide.

Cette relation 3 est connue du document S. Kane, and J. Squier, "Grism-pair stretcher-compressor system for simultaneous second- and third-order dispersion compensation in chirped-pulse amplification,"J. Opt. Soc. Am. B. 14, 661 (1997).

A cause de la forme du gain, le spectre S2 des impulsions lumineuses amplifiées 7 est modelé de façon asymétrique, ce qui résulte en une phase spectrale asymétrique via l'effet d'automodulation de phase (SPM). Le signe de $\varphi_3$ est inversé et, pour une puissance $P_L$ de la deuxième source de pompe laser 4 égale à 19 W), le rapport $\varphi_3/\varphi_2$ compense exactement le rapport $\varphi_3/\varphi_2$ du compresseur 8.

Il est possible de mesurer le rapport $\varphi_3/\varphi_2$ des impulsions lumineuses amplifiées 7 avant compression à différentes puissances de sortie ($0.76 \leq g \leq 0.82$ m$^{-1}$), à l'aide d'un système d'autocorrélation résolue en fréquence 25 (FROG « frequency-resolved optical gating »), récupérant une fraction du signal lumineux des impulsions lumineuses amplifiées 7 par l'intermédiaire d'un miroir dichroïque 26, disposé entre la fibre optique amplificatrice 6 et le compresseur 8. Un tel système d'autocorrélation résolue en fréquence 25 (FROG) est connu du document R. Trebino, K. W. Delong, "Method and apparatus for measuring the intensity and phase of one or more ultrashort light pulses and for measuring optical properties of materials," US patent 5,530,544 (1996). La mesure peut être effectuée en temps réel ou ponctuellement.

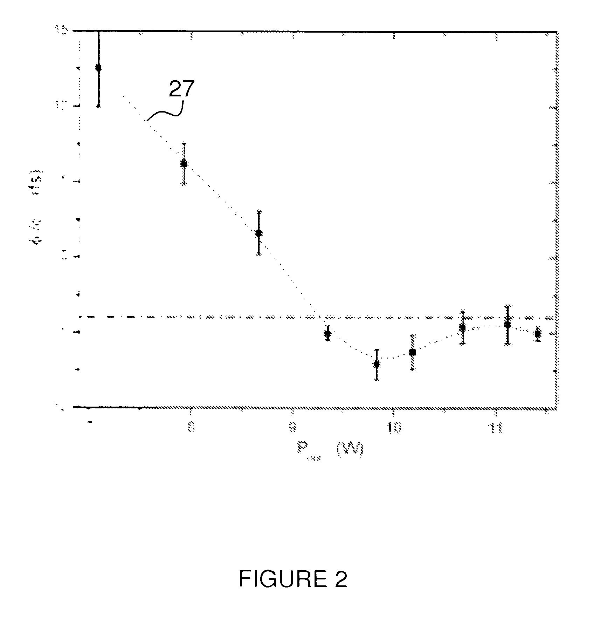

La figure 2 montre l'évolution du rapport ($\varphi_3/\varphi_2$) mesuré 27 en fonction de la puissance des impulsions lumineuses amplifiées 7 en sortie de la fibre optique amplificatrice 6, variant de 7 à 11,5 W. L'axe des abscisses représente la puissance des impulsions lumineuses amplifiées 7 en Watts et l'axe des ordonnées représente le rapport ($\varphi_3/\varphi_2$) mesuré en femtosecondes. L'évolution du rapport $\varphi_3/\varphi_2$ mesuré est uniquement due aux non-linéarités de la fibre optique amplificatrice 6.

Connaissant le rapport ($\varphi_3/\varphi_2$) associé au compresseur 8, il est possible de déterminer la puissance en sortie de la fibre optique amplificatrice 6 nécessaire et d'ajuster la puissance $P_L$ de la deuxième source de pompe laser 4 en conséquence, de manière à obtenir cette puissance de sortie et d'avoir une compensation optimale des deux premiers ordres de dispersion.

Dans cet exemple qui correspond aux paramètres donnés dans l'exemple de la figure 1, le compresseur 8 comporte deux réseaux 10, 10' comportant chacun 1250 traits par millimètre, ce qui fixe le rapport ($\varphi_3/\varphi_2$ du compresseur 8 à -4 fs. On peut donc s'attendre à obtenir une bonne qualité d'impulsions lumineuses ultracourtes comprimées 9 en sortie du compresseur 8 à partir d'environ 9 W de puissance en sortie de la fibre optique amplificatrice 6, d'après la figure 2.

La valeur de $\varphi_2$ varie assez peu, de 0.073 à 0.065 ps$^2$ (proche des valeurs théoriques de 0.079 à 0.073 ps$^2$ pour des impulsions lumineuses paraboliques idéales). La valeur de $\varphi_3$ (en ps$^3$) varie considérablement sur un ordre de grandeur, et change de signe comme prévu pour une puissance $P_L$ du deuxième flux lumineux de pompe 5 de 19 W.

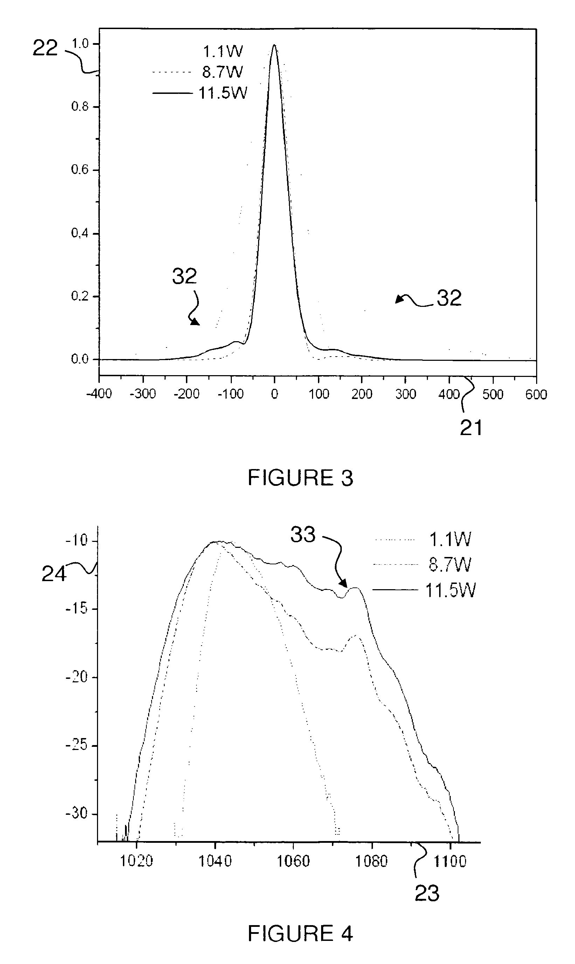

La figure 3 représente le profil des impulsions lumineuses ultracourtes comprimées 9 en sortie du compresseur 8, en fonction du temps, pour des puissances d'impulsions lumineuses amplifiées 7, de 1,1 W, 8,7 W et 11,5 W.

L'axe des abscisses 21 représente le temps en femtosecondes et l'axe des ordonnées 22 représente l'intensité (en unités arbitraires).

Pour une puissance d'impulsions lumineuses amplifiées 7 de 1,1 W (qui se situe sous la limite du spectre de gain S3, correspondant à une puissance de 1,8 W en sortie de la fibre optique amplificatrice 6), les impulsions ultracourtes comprimées 9 paraboliques ne sont pas comprimées correctement à 143 fs. Elles montrent des structures secondaires 32 (satellites) typiques de la présence de dispersions d'ordre 3. La puissance $P_L$ du deuxième flux lumineux de pompe 5 de la deuxième source de pompe laser 4 est de 5 W. La largeur de bande B1 du spectre d'impulsion d'entrée S1 est de 15 nm. La largeur de bande B2 du spectre d'impulsions amplifiées S2 asymétrique est de 21 nm.

Pour une puissance d'impulsions lumineuses amplifiées 7 de 8,7 W, (correspondant à des impulsions lumineuses ultracourtes comprimées 9 de 6 W), les impulsions lumineuses ultracourtes comprimées 9 sont presque parfaitement comprimées (98% d'énergie dans le lobe principal), avec une durée de 70 fs, une bande spectrale de 31 nm, une énergie de 220 nJ, ce qui correspond à une puissance crête de 3,5 MW. La puissance $P_L$ du deuxième flux lumineux de pompe 5 de la deuxième source de pompe laser 4 est de 19 W. La largeur de bande B1 du spectre d'impulsion d'entrée S1 est de 15 nm. La largeur de bande B2 du spectre d'impulsions amplifiées S2 asymétrique est de 31 nm.

Pour une puissance d'impulsions lumineuses amplifiées 7 maximale de 11,5 W (correspondant à des impulsions ultracourtes comprimées 9 de 7,8 W), des impulsions ultracourtes comprimées 9 de 63 fs sont produites avec une largeur spectrale de 48,5 nm. Bien qu'une structure satellite 32 apparaisse, la qualité des impulsions ultracourtes comprimées 9 est très satisfaisante (89 % d'énergie dans le lobe principal), ce qui mène à une énergie par impulsion ultracourte comprimée 9 de 290 nJ et une puissance crête de 4,6 MW. La puissance $P_L$ du deuxième flux lumineux de pompe 5 de la deuxième source de pompe laser 4 est de 25 W. La largeur de bande B1 du spectre d'impulsion d'entrée S1 est de 15 nm. La largeur de bande B2 du spectre d'impulsions amplifiées S2 asymétrique est de 48 nm.

La figure 4 représente le spectre des impulsions lumineuses ultracourtes comprimées 9 en sortie du compresseur 8, en fonction de la longueur d'onde, pour des puissances d'impulsions lumineuses amplifiées 7, de 1,1 W, 8,7 W et 11,5 W.

L'axe des abscisses 23 représente les longueurs d'onde en nanomètres et l'axe des ordonnées 24 représente l'intensité normalisée en décibels (dB).

Il est ainsi possible d'observer expérimentalement la forme du spectre S2 des impulsions lumineuses amplifiées 7. Au-delà de 5 W de puissance d'impulsions lumineuses amplifiées 7 moyenne, une asymétrie se forme, avec une pente plus raide du coté des courtes longueurs d'onde, et le développement de contenu spectral 33 vers les grandes longueurs d'onde à mesure que la puissance augmente.

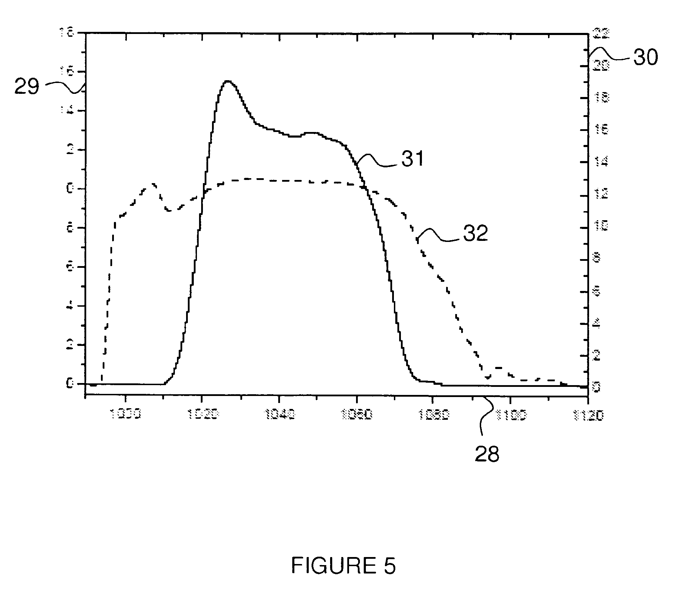

La figure 5 représente l'intensité du spectre 31 et de la phase spectrale 32 des impulsions ultracourtes comprimées 9, correspondant à des impulsions lumineuses amplifiées 7 de puissance maximale de 11,5 W.

L'axe des abscisses 28 représente les longueurs d'onde en nanomètres, l'axe des ordonnées à gauche de la figure 29 représente l'intensité en unités arbitraires (a.u.) et l'axe des ordonnées à droite de la figure 30 représente la phase spectrale en radian (rad).

La forme du spectre 31 et de la phase spectrale 32 des impulsions ultracourtes comprimées 9 montre que les dispersions d'ordre 2 et 3 ont été compensées. Le modelage spectral a bien été effectué. La phase spectrale 32 est aplanie (ou plate), résultant de la bonne compensation entre la dispersion de troisième ordre (TOD) du compresseur 8 et la phase spectrale non linéaire acquise dans la fibre optique amplificatrice 6.

Dans les exemples précédents, le moyen apte à compenser les dispersions générées par le compresseur 8 compense les phases spectrales d'ordre 2 ($\varphi_2$) et 3 ($\varphi_3$) mais peut compenser également des dispersions d'ordres différents, par exemple d'ordre 4 ou 5.

Les exemples ci-dessus montrent que pour une longueur L de fibre optique amplificatrice 6 égale à 6,5 m, la puissance $P_L$ du deuxième flux lumineux de pompe 5 de la deuxième source de pompe laser 4 peut être comprise entre 15 W et 25 W, ce qui permet d'obtenir une compensation correcte dans cette gamme de puissance.

Ainsi, il est possible d'obtenir des impulsions lumineuses comprimées 9 en sortie du compresseur 8 de très bonne qualité temporelle, de durée bien inférieure à ce qu'il est possible d'obtenir avec des systèmes CPA de l'art antérieur. La source d'impulsions lumineuses ultrabrèves décrite dans l'exemple de la figure 1 permet de générer des impulsions lumineuses comprimées 9 ayant une durée de 63 fs, une énergie de 290 nJ, une puissance crête de 4,6 MW, à une cadence de 27 MHz et une longueur d'onde de 1050 nm. Les impulsions lumineuses comprimées 9 sont comprimées à une durée inférieure à celle des impulsions lumineuses amplifiées 7 générées par la fibre optique amplificatrice 6.

**Revendications**

1. Source d'impulsions lumineuses ultrabrèves de forte puissance comprenant :

   - une première source de pompe laser (1) apte à délivrer un premier flux lumineux de pompe (12),
   - un oscillateur laser à verrouillage de modes (2) apte à recevoir ledit premier flux lumineux de pompe (12) et à délivrer des impulsions lumineuses d'entrée (3) ultracourtes, lesdites impulsions lumineuses d'entrée présentant un spectre d'impulsion d'entrée S1, de largeur de bande B1,
   - une deuxième source de pompe laser (4) apte à délivrer un deuxième flux lumineux de pompe (5),
   - un guide d'onde (6) apte à recevoir ledit deuxième flux lumineux de pompe (5) et à amplifier les impulsions lumineuses d'entrée (3) en régime non linéaire de façon à introduire des phases spectrales dans les impulsions lumineuses d'entrée (3), générant des impulsions lumineuses amplifiées (7) ultracourtes, présentant un spectre d'impulsions amplifiées S2 asymétrique, de largeur de bande B2,
   - un compresseur (8) apte à comprimer temporellement les impulsions lumineuses amplifiées (7), ledit compresseur (8) générant des phases spectrales prédéterminées dans les impulsions lumineuses amplifiées (7),

   **caractérisée en ce que** :

   - le guide d'onde (6) présente une largeur de bande B3 et un spectre de gain S3 fini asymétrique,
   - le régime d'amplification non linéaire se situe au-delà de la limite imposée par le spectre de gain fini S3 du guide d'onde et sous le seuil de diffusion Raman stimulée et
   - le guide d'onde (6) consiste en un moyen apte à compenser les phases spectrales prédéterminées générées au moins par le compresseur (8), la deuxième source de pompe laser (4) étant apte à délivrer un deuxième flux lumineux de pompe (5) de puissance $P_L$ telle que les phases spectrales générées par le guide d'onde (6) soient opposées ou quasiment opposées aux phases spectrales prédéterminées générées par le compresseur (8), de façon à générer des impulsions lumineuses ultracourtes comprimées (9) en sortie du compresseur (8), présentant une phase spectrale plate ou quasiment plate.

2. Source d'impulsions lumineuses ultrabrèves de forte puissance selon la revendication 1, **caractérisée en ce que** le guide d'onde (6) présente un spectre de gain fini S3, de largeur de bande B3, ledit guide d'onde (6) étant tel que la largeur de bande B1 du spectre des impulsions d'entrée S1 soit inférieure à la largeur de bande B3 du spectre de gain fini S3, et la largeur de bande B2 du spectre des impulsions amplifiées S2 étant identique ou quasiment identique à la largeur de bande B3 du spectre de gain S3 du guide d'onde (6).

3. Source d'impulsions lumineuses ultrabrèves de forte puissance selon la revendication 1 ou 2, **caractérisée en ce que** le moyen apte à compenser les dispersions générées au moins par le compresseur (8) compense les phases spectrales au moins d'ordre 2 ($\varphi_2$) et 3 ($\varphi_3$).

4. Source d'impulsions lumineuses ultrabrèves de forte puissance selon l'une quelconque des revendications 1 à 3, **caractérisée en ce que** le guide d'onde (6) apte à amplifier les impulsions lumineuses d'entrée (3) en régime non linéaire est une fibre optique amplificatrice dopée aux ions ytterbium, ladite fibre optique amplificatrice ayant une longueur L supérieure à une longueur critique Lc à partir de laquelle la largeur de bande B2 du spectre des impulsions amplifiées S2 est identique ou quasiment identique à la largeur de bande B3 du spectre de gain S3 du guide d'onde (6).

5. Source d'impulsions lumineuses ultrabrèves de forte puissance selon l'une quelconque des revendications 1 à 4, **caractérisée en ce que** pour une longueur L de la fibre optique amplificatrice (6) égale à 6,5 m, la puissance $P_L$ du deuxième flux lumineux de pompe (5) de la deuxième source de pompe laser (4) est compris entre 15 W et 25 W.

**6.** Source d'impulsions lumineuses ultrabrèves de forte puissance selon l'une quelconque des revendications 1 à 5, **caractérisée en ce que** :

- les première (1) et deuxième (4) sources de pompe laser sont des diodes laser délivrant chacune une puissance de 25 W,
- l'oscillateur laser à verrouillage de modes (2) est un oscillateur femtoseconde comprenant une cavité résonnante de longueur telle que le taux de répétition dudit oscillateur laser soit de 27 MHz, ledit oscillateur laser femtoseconde à verrouillage de modes (2) délivrant des impulsions lumineuses d'entrée ultracourtes (3) ayant une durée de l'ordre de la centaine de femtosecondes et une énergie de l'ordre de 3,5 nJ,
- la longueur L de la fibre optique amplificatrice dopée aux ions ytterbium (6) est de 6,5 m, ladite fibre (6) présentant un coeur de signal de diamètre égal à 20 μm et un coeur de pompe de diamètre égal à 400 μm,
- le compresseur (8) comprend deux réseaux en transmission (10, 10') identiques, comprenant chacun 1250 traits/mm.

**7.** Source d'impulsions lumineuses ultrabrèves de forte puissance selon l'une quelconque des revendications 4 à 6, **caractérisée en ce que** la fibre optique amplificatrice (6) est une fibre à maintien de polarisation.

**8.** Source d'impulsions lumineuses ultrabrèves de forte puissance selon l'une quelconque des revendications 4 à 7, **caractérisée en ce que** la fibre optique amplificatrice (6) est une fibre à dispersion normale.

**9.** Source d'impulsions lumineuses ultrabrèves de forte puissance selon l'une quelconque des revendications 4 à 8, **caractérisée en ce que** la fibre optique amplificatrice (6) comprend une première partie de fibre de longueur critique Lc dans laquelle les impulsions lumineuses d'entrée (3) sont transmises en régime parabolique, et une deuxième partie de fibre dans laquelle les impulsions lumineuses d'entrée (3) sont transmises en régime non linéaire.

**10.** Source d'impulsions lumineuses ultrabrèves de forte puissance selon l'une quelconque des revendications 1 à 9, **caractérisée en ce qu'**elle comprend un modulateur optique, disposé entre l'oscillateur laser à verrouillage de modes (2) et le guide d'onde (6), de façon à réduire la cadence de répétition des impulsions lumineuses amplifiées (7) en sortie dudit oscillateur laser à verrouillage de modes (2).

**11.** Source d'impulsions lumineuses ultrabrèves de forte puissance selon l'une quelconque des revendications 1 à 10, **caractérisée en ce qu'**elle comprend un isolateur (11), disposé en aval de l'oscillateur laser à verrouillage de modes (2).

**Patentansprüche**

**1.** Quelle für ultrakurze Hochleistungslichtimpulse, welche umfasst:

- eine erste Laserpumpenquelle (1), die geeignet ist, einen ersten Pumpenlichtstrom (12) zu liefern,
- einen modenverriegelten Laseroszillator (2), der geeignet ist, den ersten Pumpenlichtstrom (12) zu empfanden und ultrakurze Eingangslichtimpulse (3) zu liefern, wobei die Eingangslichtimpulse ein Eingangsimpulsspektrum S1 mit einer Bandbreite B1 aufweisen,
- eine zweite Laserpumpenquelle (4), die geeignet ist, einen zweiten Pumpenlichtstrom (5) zu liefern,
- einen Wellenleiter (6), der geeignet ist, den zweiten Pumpenlichtstrom (5) zu empfangen und die Eingangslichtimpulse (3) in einem nichtlinearen Regime derart zu verstärken, dass spektrale Phasen in die Eingangslichtimpulse (3) eingefügt werden, die ultrakurze verstärkte Lichtimpulse (7) erzeugten, die ein asymmetrisches Spektrum verstärkter Impulse S2 mit einer Bandbreite B2 aufweisen,
- einen Kompressor (8), der geeignet ist, die verstärkten Lichtimpulse (7) zeitlich zu komprimieren, wobei der Kompressor (8) vorbestimmte spektrale Phasen in den verstärkten Lichtimpulse (7) erzeugt,

dadurch gekennzeichnet, dass:

- der Wellenleiter (6) eine Bandbreite B3 und ein asymmetrisches finites Verstärkungsspektrum S3 aufweist,
- der nichtlineare Verstärkungsbereich sich jenseits des Grenzwertes, der durch das finite Verstärkungsspektrum S3 des Wellenleiters vorgegeben ist, und unterhalb des Schwellenwertes der stimulierten Raman-Streuung befindet, und
- der Wellenleiter (6) aus einem Mittel besteht, das geeignet ist, die vorbestimmten spektralen Phasen zu kompensieren, die mindestens durch den Kompressor (8) erzeugt werden, wobei die zweite Laserpumpenquelle (4) geeignet ist, einen zweiten Pumpenlichtstrom (5) mit einer solchen Leistung $P_L$ zu liefern, dass die von dem Wellenleiter (6) erzeugten spektralen Phasen zu den von dem Kompressor (8) erzeugten vorbestimmten spektralen Phasen entgegengesetzt oder im Wesentlichen entgegengesetzt sind, so dass am Ausgang des Kompressors (8) komprimierte ultrakurze Lichtimpulse (9) erzeugt werden, die eine flache oder im Wesentlichen flache spektrale Phase aufweisen.

2. Quelle für ultrakurze Hochleistungslichtimpulse nach Anspruch 1, dadurch gekennzeichnet, dass der Wellenleiter (6) ein finites Verstärkungsspektrum S3 mit einer Bandbreite B3 aufweist, wobei der Wellenleiter (6) so beschaffen ist, dass die Bandbreite B1 des Eingangsimpulsspektrums S1 kleiner als die Bandbreite B3 des finiten Verstärkungsspektrums S3 ist und die Bandbreite B2 des Spektrums verstärkter Impulse S2 mit der Bandbreite B3 des Verstärkungsspektrums S3 des Wellenleiters (6) identisch oder im Wesentlichen identisch ist.

3. Quelle für ultrakurze Hochleistungslichtimpulse nach Anspruch 1 oder 2, **dadurch gekennzeichnet, dass** das Mittel, welches geeignet ist, die mindestens durch den Kompressor (8) erzeugten Dispersionen zu kompensieren, die spektralen Phasen mindestens der Ordnungen 2 ($\varphi_2$) und 3 ($\varphi_3$) kompensiert.

4. Quelle für ultrakurze Hochleistungslichtimpulse nach einem der Ansprüche 1 bis 3, dadurch gekennzeichnet, dass der Wellenleiter (6), der geeignet ist, die Eingangslichtimpulse (3) in einem nichtlinearen Regime zu verstärkern, eine mit Ytterbium-Ionen dotierte optische Verstärkerfaser ist, wobei die optische Verstärkerfaser eine Länge L aufweist, die größer als eine kritische Länge Lc ist, von der ab die Bandbreite B2 des Spektrums verstärkter Impulse S2 mit der Bandbreite B3 des Verstärkungsspektrums S3 des Wellenleiters (6) identisch oder im Wesentlichen identisch ist.

5. Quelle für ultrakurze Hochleistungslichtimpulse nach einem der Ansprüche 1 bis 4, **dadurch gekennzeichnet, dass** für eine Länge L der optischen Verstärkerfaser (6) von 6,5 m die Leistung $P_L$ des zweiten Pumpenlichtstroms (5) der zweiten Laserpumpenquelle (4) zwischen 15 W und 25 W liegt.

6. Quelle für ultrakurze Hochleistungslichtimpulse nach einem der Ansprüche 1 bis 5, **dadurch gekennzeichnet, dass**:

   - die erste (1) und die zweite (4) Laserpumpenquelle Laserdioden sind, die jeweils eine Leistung von 25 W liefern,
   - der modenverriegelte Laseroszillator (2) ein Femtosekundenoszillator ist, der einen Resonanzraum mit einer solchen Länge aufweist, dass die Repetitionsrate des Oszillators 27 MHz beträgt, wobei der modenverriegelte Femtosekunden-Laseroszillator (2) ultrakurze Eingangslichtimpulse (3) liefert, die eine Dauer in der Größenordnung von etwa hundert Femtosekunden und eine Energie in der Größenordnung von 3,5 nJ aufweisen,
   - die Länge L der mit Ytterbium-Ionen dotierten optischen Verstärkerfaser (6) 6,5 m beträgt, wobei die Faser (6) einen Signalkern mit einem Durchmesser von 20 $\mu$m und einen Pumpkern mit einem Durchmesser von 400 $\mu$m aufweist,
   - der Kompressor (8) zwei identische Transmissionsgitter (10, 10') aufweist, die jeweils 1250 Linien/mm umfassen.

7. Quelle für ultrakurze Hochleistungslichtimpulse nach einem der Ansprüche 4 bis 6, **dadurch gekennzeichnet, dass** die optische Verstärkerfaser (6) eine polarisationserhaltende Faser ist.

8. Quelle für ultrakurze Hochleistungslichtimpulse nach einem der Ansprüche 4 bis 7, **dadurch gekennzeichnet, dass** die optische Verstärkerfaser (6) eine Faser mit normaler Dispersion ist.

9. Quelle für ultrakurze Hochleistungslichtimpulse nach einem der Ansprüche 4 bis 8, **dadurch gekennzeichnet, dass** die optische Verstärkerfaser (6) einen ersten Faserabschnitt mit einer kritischen Länge Lc umfasst, in welchem die Eingangslichtimpulse (3) in einem parabolischen Regime übertragen werden, und einen zweiten Faserabschnitt, in welchem die Eingangslichtimpulse (3) in einem nichtlinearen Regime übertragen werden.

10. Quelle für ultrakurze Hochleistungslichtimpulse nach einem der Ansprüche 1 bis 9, **dadurch gekennzeichnet, dass** sie einen optischen Modulator umfasst, der zwischen modenverriegelten Laseroszillator (2) und dem Wellenleiter (6) angeordnet ist, so dass die Repetitionsrate der verstärkten Lichtimpulse (7) am Ausgang des modenverriegelten Laseroszillators (2) verringert wird.

11. Quelle für ultrakurze Hochleistungslichtimpulse nach einem der Ansprüche 1 bis 10, **dadurch gekennzeichnet, dass** sie einen Isolator (11) umfasst, der dem modenverriegelten Laseroszillator (2) nachgeschaltet angeordnet ist.

**Claims**

1. Source of high-power ultrashort light pulses comprising:

- a first laser pump source (1) adapted to deliver a first pump light flow (12),
- a mode-locked laser oscillator (2) adapted to receive said first pump light flow (12) and to deliver ultrashort in light pulses (3), said input light pulses having an input-pulse spectrum S1 with a bandwidth B1,
- a second laser pump source (4) adapted to deliver a second pump light flow (5),
- a waveguide (6) adapted to receive said second pump light flow (5) and to amplify the input light pulses (3) in a non-linear regime in order to introduce spectral phases in the input light pulses (3), generating ultrashort amplified light pulses (7), having an asymmetrical amplified-pulse spectrum S2 with a bandwidth B2,
- a compressor (8) adapted to time-compress the amplified light pulses (7), said compressor (8) generating predetermined spectral phases in the amplified light pulses (7),

**characterized in that**:

- the waveguide (6) has a finite asymmetrical gain-spectrum S3 with a a bandwidth B3,
- the non-linear amplification regime is located beyond the limit imposed by the finite gain-spectrum 53 and under the stimulated Raman scattering threshold,
- the waveguide (6) consists of a means adapted to compensate for the predetermined spectral phases generated at least by the compressor (8), the second laser pump source (4) being adapted to deliver a second pump light flow (5) having a power $P_L$ such that the the spectral phases generated by the waveguide (6) are opposed or quasi-opposed to the predetermined spectral phases generated by the compressor (8), in order to generate, at the output of the compressor (8), compressed ultrashort light pulses (9) with a planar or quasi-planar spectral phase.

2. Source of high-power ultrashort light pulses according to claim 1, **characterized in that** said waveguide (6) has a finite gain-spectrum S3, with a bandwidth B3, said waveguide (6) being such that the bandwidth B1 of the input-pulse spectrum S1 is smaller than the bandwidth B3 of the finite gain-spectrum S3, and the bandwidth B2 of the amplified-pulse spectrum S2 being the same or almost the same as the bandwidth B3 of the gain spectrum S3 of the waveguide (6).

3. Source of high-power ultrashort light pulses according to claim 1 or 2, **characterized in that** the means adapted to compensate for the dispersions generated at least by the compressor (8) compensates for the spectral phases of at least order 2 ($\phi_2$) and 3 ($\phi_3$).

4. Source of high-power ultrashort light pulses according to anyone of claims 1 to 3, **characterized in that** the waveguide (6) adapted to amplify the input light pulses (3) in a non-linear regime is an ytterbium-ion-doped amplifying optical fiber, said amplifying optical fiber (6) having a length L greater than a critical length $L_c$ beyond which the bandwidth B2 of the amplified-pulse spectrum S2 is the same or almost the same as the bandwidth B3 of the gain spectrum S3 of the waveguide (6).

5. Source of high-power ultrashort light pulses according to anyone of claims 1 to 4, **characterized in that**, for a length L of the amplifying optical fiber (6) equal to 6.5 m, the power $P_L$ of the second pump light flow (5) of the second laser pump source (4) is comprised between 15 W and 25 W.

6. Source of high-power ultrashort light pulses according to anyone of claims 1 to 5, **characterized in that**:

- the first (1) and second (4) laser pump sources are laser diodes each delivering a power of 25 W,
- the mode-locked laser oscillator (2) is a femtosecond oscillator comprising a resonant cavity with a length such that the repetition rate of said laser oscillator is 27 MHz, said mode-locked femtosecond laser oscillator (2) delivering ultrashort input light pulses (3) having a duration of the order of one hundred of femtoseconds and an energy that can reach 3.5 nJ,
- the length L of the ytterbium-ion-doped amplifying optical fiber (6) is 6.5 m, said fiber (6) having a signal core of 20 $\mu$m in diameter and a pump core of 400 $\mu$m in diameter,
- the compressor (8) comprises two identical transmission gratings (10, 10'), each comprising 1 lines/mm.

7. Source of high-power ultrashort light pulses according to anyone of claims 4 to 6, **characterized in that** the amplifying optical fiber (6) is a polarisation-maintaining fiber.

8. Source of high-power ultrashort light pulses according to anyone of claims 4 to 7, **characterized in that** the amplifying optical fiber (6) is a normal dispersion fiber.

9. Source of high-power ultrashort light pulses according to anyone of claims 4 to 8, **characterized in that** the amplifying optical fiber (6) comprises a first portion of fiber having a critical length $L_c$ over which the input light pulses (3) are transmitted in a parabolic regime, and a second portion of fiber over which the input light pulses (3) are transmitted in a non-linear regime

**10.** Source of high-power ultrashort light pulses according to claim 1, **characterized in that** it comprises an optical modulator, arranged between the mode-locked laser oscillator (2) and the waveguide (6), in order to reduce the repetition rate of the amplified light pulses (7) at the output of said mode-locked laser oscillator (2).

**11.** Source of high-power ultrashort light pulses according to claim 1, **characterized in that** it comprises an isolator (11), arranged downstream from the mode-locked laser oscillator (2).

FIGURE 1

FIGURE 2

FIGURE 3

FIGURE 4

FIGURE 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7167300 B2
- US 5530544 A

**Littérature non-brevet citée dans la description**

- **J. LIMPERT ; A. LIEM ; M. REICH ; T. SCHREIBER ; S. NOLTE ; H. ZELLMER ; A. TÜNNERMANN ; J. BROENG ; A. PETERSSON ; C. JAKOBSEN.** Low-nonlinearity single-transverse-mode ytterbium-doped photonic crystal fiber amplifier. *Opt. Express,* 2004, vol. 12, 1313-1319
- **D. STRICKLAND ; G. MOUROU.** Compression of amplified chirped optical pulses. *Opt. Commun.,* 1985, vol. 56, 219-221
- **L. SHAH ; Z. LIU ; I. HARTL ; G. IMESHEV ; G. CHO ; M. FERMANN.** High energy femtosecond Yb cubicon fiber amplifier. *Opt. Express,* 2005, vol. 13, 4717-4722
- **L. KUZNETSOVA ; A. CHONG ; F. W. WISE.** Interplay of nonlinearity and gain shaping in femtosecond fiber amplifiers. *Opt. Lett.,* 2006, vol. 31, 2640-2642
- **D. B. S. SOH ; J. NILSSON ; A. B. GRUDININ.** Efficient femtosecond pulse generation using a parabolic amplifier combined with a pulse compressor. I. Stimulated Raman-scattering effects. *J. Opt.Soc. Am.,* 2005, vol. 22, 1-9
- **LIMPERT et al.** High-power femtosecond Yb-doped fiber amplifier. *OPTICS EXPRESS OPT. SOC. AMERICA USA,* 15 Juillet 2002, vol. 10 (14
- Ultrashort-pulse fiber amplifiers. **A. GALVANAUS-KAS.** Ultrafast lasers. CRC, 2002, 209
- **G. P. AGRAWAL.** Nonlinear Fiber Optics. Academic Press, 1995, 50
- **S. KANE ; J. SQUIER.** Grism-pair stretcher-compressor system for simultaneous second- and third-order dispersion compensation in chirped-pulse amplification. *J. Opt. Soc. Am.,* 1997, vol. B. 14, 661